# EUROPEAN PATENT APPLICATION

(11) **EP 1 936 961 A2**
(43) Date of publication of application: **25.06.2008**
(21) Application number: 07111152.0
(22) Date of filing: 27.06.2007
(51) Int. Cl.: H04N 5/445

(54) **Method and apparatus for selecting a broadcast channel**

(30) Priority: 20.12.2006 KR 20060130836
(71) Applicant: SAMSUNG ELECTRONICS CO., LTD., Suwon-si, Gyeonggi-do 442-742 (KR)
(72) Inventor: Jeon, Sung-min 222-1706 Hwanggol Maeul 2-danji Apt.,, Suwon-si, Gyeonggi-do (KR)
(74) Representative: Pisani, Diana Jean

(57) **Abstract**

An apparatus (100) is arranged to constructs a broadcast information providing screen image (110, 112) in which broadcast information of a plurality of channels, such as digital broadcast channels, is arranged at location corresponding to an arrangement of user input keys (220, 221) of a user input device (200), for display on a display unit.. If an input signal is received from one of the user input keys (220, 221), wherein the controller selects a broadcast channel corresponding to the broadcast information at the location on the screen image (110, 112) corresponding to the user input key from which the input signal is received. The apparatus (100) and user input device (200) may be provided separately, or as an integrated device. In this manner, a user interface for selecting one of a plurality of channels is provided that is intuitive and requires relatively few key operations by a user.

## Description

The present invention relates to a method and apparatus for selecting a broadcast channel, such as a digital broadcast channel.

As the types of digital broadcasting transmission media has become more diverse, including terrestrial, satellite, and cable transmissions, the total number of digital broadcast channels has increased. Also, some existing terrestrial digital broadcasters provide one high definition (HD) channel in a predetermined frequency band of 6 MHz. However, in addition to an HD rate video channel, a multi-mode service (MMS) that transmits a standard definition (SD) rate video channel/audio channel/data channel is provided in a conventional frequency band. In the case of the MMS, a channel number includes a major channel number and sub channel numbers.

In order to input the number of a broadcast channel and select a broadcast program in this conventional environment, a user presses several number keys to select the broadcast channel on a user input device. Alternatively, a broadcast channel can be selected using an on-screen electronic program guide (EPG), which requires the user to press arrow keys on a user input device several times and, further, to press a button for selecting the broadcast channel.

Example embodiments of the present invention may overcome the above disadvantage and other disadvantages not described above. However, the present invention is not required to overcome the disadvantages described above and an embodiment of the present invention may be devised that does not overcome the problem described above.

According to an aspect of the present invention, there is provided a method of selecting a broadcast channel, the method including constructing a broadcast information providing screen image so that broadcast information of each of a plurality of channels is displayed at a location corresponding to a location of each of a plurality of user input keys, based on arrangement information of at least one piece of the user input keys; outputting the broadcast information providing screen image; and if an input signal is received from one of the user input keys, selecting a broadcast channel corresponding to broadcast information at a location corresponding to a location of the user input key through which the input signal is received.

By providing a screen image that corresponds to an input key layout of a user input device, this aspect of the invention provides a method of channel selection that may be more intuitive for a user and, thus, easier to use than the prior channel selection methods discussed above.

The constructing of the broadcast information providing screen image may include mapping an identification value which identifies an input signal received through each of the user input keys to broadcast information at a location corresponding to the location of each of the user input keys.

If an input signal requesting a broadcast information providing screen image that contains broadcast information of another channel is received, the method may further include updating the mapping so that the identification value of the input signal received through each of the user input keys indicates broadcast information at the location corresponding to the location of each of the user input keys in the broadcast information providing screen image.

If the user input keys are arranged in a matrix format having particular dimensions, the broadcast information providing screen image may be constructed so that cells containing broadcast information are arranged in a matrix format having the same dimensions as the matrix of the user input keys.

If the cells are arranged in a matrix format, one axis of the matrix of cells may denote channels of each broadcaster, and the other axis of the matrix of cells may denote sub channels of the channels of each broadcaster.

At least one piece of the broadcast information may comprise at least one of a title and a broadcast channel of a broadcast program that is currently being broadcast.

The at least one piece of the broadcast information may comprise an image representing the broadcast program.

The user input keys may be constructed with numbered buttons.

According to another aspect of the present invention, there is provided an apparatus for selecting a broadcast channel, the apparatus including a controller which constructs a broadcast information providing screen image such that broadcast information of each of a plurality of channels is arranged at a location corresponding to a location of each of a plurality of user input keys, based on arrangement information of at least one piece of the user input keys; a display processor which controls outputting of the broadcast information providing screen image; and a user input signal receiving unit which receives an input signal from one of the user input keys, wherein the controller selects a broadcast channel corresponding to broadcast information at a location corresponding to a location of the user input key through which the input signal is received.

According to another aspect of the present invention, there is provided a computer readable medium having recorded thereon a method of selecting a broadcast channel, the method including constructing a broadcast information providing screen image so that broadcast information of each of a plurality of channels is displayed at a location corresponding to a location of each of a plurality of user input keys, based on arrangement information of at least one piece of the user input keys; outputting the broadcast information providing screen image; and if an input signal is received from one of the user input keys, selecting a broadcast channel corresponding to broadcast information at a location corresponding to a location of the user input key through which the input signal is received.

Examples of embodiments of the invention will now be described in detail with reference to the attached drawings in which:
FIG. 1 illustrates an arrangement comprising broadcast channel selecting apparatus according to an embodiment of the invention and a user input device;
FIG. 2 illustrates a screen image that corresponds to the arrangement of user input keys of a user input device, constructed by the broadcast channel selecting apparatus of FIG. 1;
FIG. 3 is a block diagram of the broadcast channel selecting apparatus of FIG. 1;
FIG. 4 illustrates mapping of an identification value of an input signal received through each user input key so as to broadcast information contained in a broadcast information providing screen image, by a broadcast channel selecting apparatus according to the embodiment;
FIG. 5 is a flowchart of a method of selecting a broadcast channel according to an embodiment of the present invention; and
FIG. 6 is a flowchart of a method of selecting a broadcast channel according to another embodiment of the present invention.

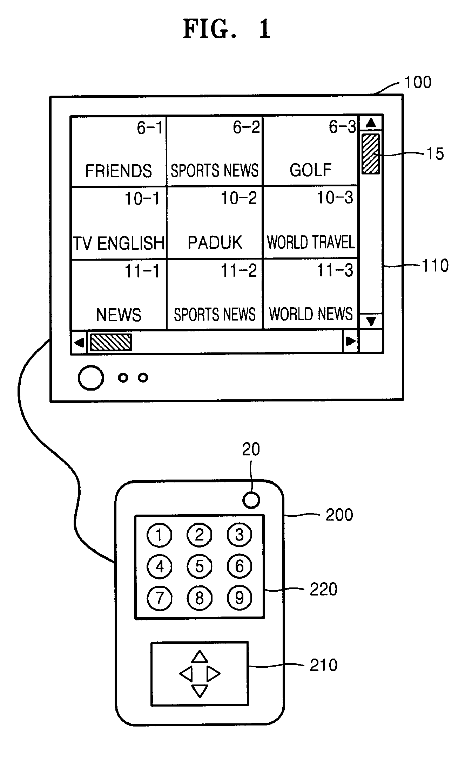

FIG. 1 illustrates a broadcast channel selecting apparatus 100 and a user input device 200 according to an embodiment of the present invention.

In this particular embodiment, when a user presses a broadcast channel selection mode key 20 of the input device 200 to select a broadcast channel, the broadcast channel selecting apparatus 100 outputs a broadcast information providing screen image, such as a screen image 110, for display by a display unit.

In the broadcast channel selecting apparatus 100, information regarding the arrangement of user input keys 220 in the user input device 200, which are used to select a broadcast channel, is stored. The broadcast information providing screen image 110 is configured so that each piece of broadcast information is displayed at a location that corresponds to the location of a corresponding one of the user input keys 220, based on the stored information.

In other words, information regarding the arrangement of the user input keys 220 is stored, regarding the layout of the user input keys 220 for selecting a broadcast channel. The arrangement information of the user input keys 220 is used to construct a screen image that provides at least one piece of broadcast information. The type of arrangement information is not limited. For example, if the user input keys 220 are arranged in a matrix format having a predetermined size, the arrangement information of the user input keys 220 may specify the total numbers of rows and columns of the matrix.

Referring to FIG. 1, the user input keys 220 of the user input device 200, which are used to select a broadcast channel, are arranged in 3 rows and 3 columns, and the broadcast channel selecting apparatus 100 produces a broadcast information providing screen image 110, in which broadcast information is displayed in 3 rows and 3 columns, in order to correspond to the arrangement of the user input keys 220. The shape of the screen image 110 may depend on the arrangement of the user input keys 220 for selecting a broadcast channel.

When a key '1' is pressed from among the user input keys 220 of the user input device 200, which are used to select a broadcast channel, a broadcast channel corresponding to broadcast information that is provided in the screen image 110 at a location corresponding to the key `1' is selected. For example, if a channel 6-1 is selected and tuned in the broadcast channel selecting apparatus 100, a broadcast program entitled "Friends" may be output. In a related art apparatus, keys '6', '-', and '1' must be pressed to select the channel 6-1. By way of contrast, in this embodiment of the present invention, a user can select a desired broadcast channel simply by pressing a single one of the user input keys 220 once.

When all pieces of broadcast information are not displayed simultaneously in the screen image, i.e., when broadcast information regarding only a certain number of channels is displayed, it is possible to construct the screen image 110 so that broadcast information for other channels can be displayed by moving a scroll bar 15. Alternatively, or additionally, the apparatus 100 may be arranged so that a user may request a broadcast information providing screen image 110 that provides the broadcast information for one or more other channels by using one of the arrow keys 210, and the broadcast channel selecting apparatus 100 may respond by outputting the requested broadcast information providing screen image 110.

The broadcast channel selecting apparatus 100 may be a digital broadcast receiver. In the arrangement shown in FIG. 1, the broadcast channel selecting apparatus 100 and the user input device 200 are connected by a wire. However, the broadcast channel selecting apparatus 100 and the user input device 200 may be configured to establish a wireless communication with each other or, alternatively, may be provided as a single unifieddevice.

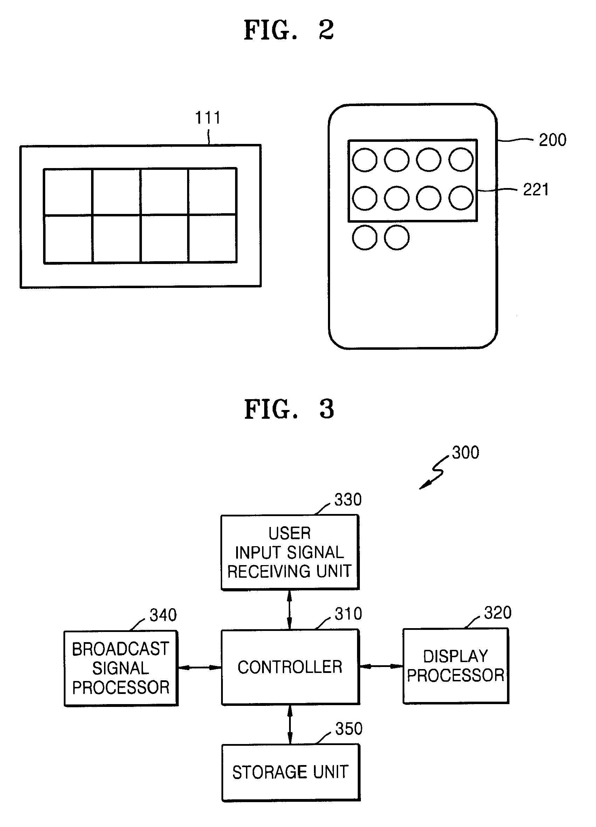

FIG. 2 illustrates a broadcast information providing screen image 111 that corresponds to the arrangement of user input keys 221 on a user input device 200, according to another embodiment of the present invention. If the user input keys 221 of the user input device 200 for selecting a desired broadcast channel are arranged in two rows and four columns, the broadcast channel selecting apparatus 100 can provide the broadcast information providing screen image 111 so that corresponding broadcast information is arranged in two rows and four columns, based on the arrangement information of the user input keys 221.

To this end, when the broadcast channel selecting apparatus 100 is initially used, the arrangement information of the user input keys 221 may be set in the broadcast channel selecting apparatus 100. As illustrated in FIG. 2, where the broadcast channel apparatus 100 and the user input device 200 are separate devices, even if the user input device 200, such as a remote controller, is changed, so that the arrangement of the user input keys 221 is changed, the broadcast information providing screen image 111 can be configured to visually correspond to the key arrangement of the user input device 200 by setting the arrangement information of the user input keys 221 of the new user input device in the broadcast channel selecting apparatus 100.

FIG. 3 is a block diagram of a broadcast channel selecting apparatus 300 according to an embodiment of the present invention, that can be used in the arrangement of FIG. 1 or in a similar arrangement in which wireless communication is provided between the broadcast channel selecting apparatus and user input device 200. The broadcast channel selecting apparatus 300 includes a controller 310, a display processor 320, a user input signal receiving unit 330, a broadcast signal processor 340 and a storage unit 350.

The user input signal receiving unit 330 receives an input signal from a user input key of the user input device 200 and transmits it to the controller 310.

The controller 310 generates a broadcast information providing screen image in which broadcast information of each channel is displayed at a location that corresponds to the location of a respective user input key, based on the arrangement of the user input keys 220, 221.

The broadcast information provided in the broadcast information providing screen image 110 may be broadcast information relating to a current time period. The arrangement information of the user input keys 220, 221 may be stored in a predetermined storage space of the controller 310. Otherwise, the arrangement information of the user input keys may be stored in the storage unit 350, and the controller 310 may refer to the arrangement information when constructing the broadcast information providing screen image 110.

For example, when the user input keys 220, 221 are arranged in a matrix format having a predetermined size, the controller 310 constructs a screen image in which cells containing broadcast information are arranged in a matrix format having a size equal to the predetermined size. For example, as illustrated in FIG. 1, where the user keys 220 for selecting a channel are arranged in 3 rows and 3 columns, the screen image is constructed in 3 rows and 3 columns.

Where the cells are to be arranged in a matrix format, the controller 310 may construct a screen image in which one axis of the matrix denotes a channel of each broadcaster and the other axis denotes sub channels of the channel of each broadcaster.

Also, the at least one piece of the broadcast information may contain one of the title and the broadcast channel of a broadcast program that is currently being broadcast. Also, an image representing a broadcast program in the form of thumbnail may be contained in a cell providing the broadcast information.

The display processor 320 controls the screen image 110 that is generated by the controller 310, to be output to and displayed in a display device (not shown).

When an input signal is received from the user input device 200, the controller 310 selects a broadcast channel corresponding to broadcast information that is provided at a location corresponding to the one of the user input keys that has been pressed. In this particular embodiment, the controller 310 maps an identification value of an input signal received through each of the user input keys to broadcast information that is provided at a location corresponding to the location of each user input key. Thus, when an input signal is received through one user input key, a broadcast channel corresponding to broadcast information mapped to an identification value of the received input signal may be selected.

Broadcast information mapped to and indicated by an identification value of the input signal received through each of the user input keys is updated according to the broadcast information providing screen image. Accordingly, a change in broadcast information can result in a change in the broadcast information mapped to each identification value.
Accordingly, when a user input signal requesting a broadcast information providing screen image that contains broadcast information of another channel is received through the user input unit 330, the controller 310 updates the mapping so that an identification value of an input signal received through each user input key indicates broadcast information currently provided at a location corresponding to the location of each user input key.

The broadcast signal processor 340 is provided if the broadcast channel selecting apparatus 300 is a digital broadcast receiver. When the broadcast signal processor 340 forwards received broadcast data transmitted through a digital broadcast signal and broadcast information, such as an electronic program guide (EPG), to the controller 310, the controller 310 may store the received broadcast data and the broadcast information in the storage unit 350, or decode them and output the broadcast data and the broadcast information to the display processor 320. The broadcast signal processor 340 may be constructed to process a broadcast signal according to a transport standard based on the path, such as satellite, terrestrial wave, or cable, through which the digital broadcast signal is transmitted. The controller 310 can select a broadcast channel based on the user input signal by controlling the broadcast signal processor 340 to tune the selected broadcast channel.

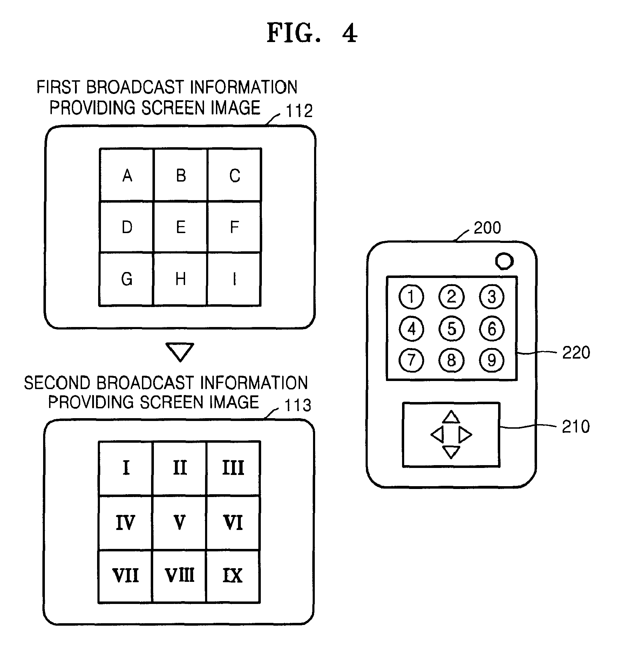

FIG. 4 illustrates an example of howan identification value of an input signal received through a user input key can be mapped onto broadcast information contained in a broadcast information providing screen image 110. Labels 'A' through 'I', indicated in the cells of a first broadcast information providing screen image 112, and 'I' through 'IX' indicated in the cells of a second broadcast information providing screen image 113, schematically represent a plurality of pieces of broadcast information of channels, which are provided in the cells.

In this example, when a user requests a broadcast information providing screen image, the first broadcast information providing screen image 112 is displayed on the broadcast channel selecting apparatus 100. If user input keys are constructed with numbered buttons 200, an identification value identifying an input signal received through a user input key 1 is mapped to the broadcast information A and an identification value identifying an input signal received through a user input key 2 is mapped to the broadcast information B. The other identification values which identify input signals received through the other user input keys are respectively mapped to broadcast information corresponding to the locations of the other user input keys in the first broadcast information providing screen image 112.

When only a part of the broadcast information is provided in the first broadcast information providing screen image 112 and a user requests broadcast information of another channel, the controller 310 updates the mapping of identification values of input signals received through the respective user input keys to broadcast information contained in a second broadcast information providing screen image 113 that is to be provided in response to the request. An identification value identifying an input signal received through the user input key 1 is updated to be mapped to the broadcast information I and an identification value identifying an input signal received through the user input key 2 is updated to be mapped to the broadcast information II. The identification values identifying input signals received through the other user input keys are also updated to be respectively mapped to a plurality of pieces of broadcast information corresponding to the locations of the other user input keys in the second broadcast information providing screen image 113. Thus, if the second broadcast information providing screen image 113 is provided, when the user selects the user input key 1, a broadcast channel corresponding to the broadcast information I in the second broadcast information providing screen image 113 may be selected and tuned into.

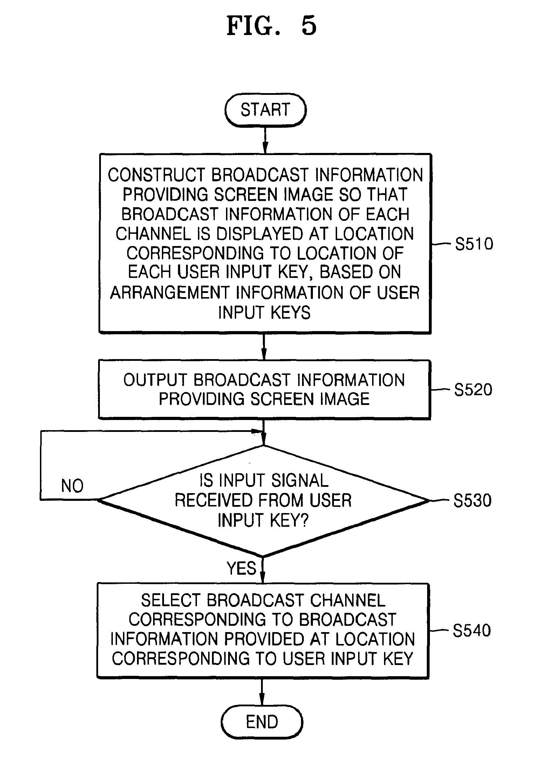

FIG. 5 is a flowchart of a method of selecting a broadcast channel according to an embodiment of the present invention that can be employed in the arrangement of FIG. 1. In operation S510, the controller 310 generates a broadcast information providing screen image 110 so that broadcast information of each channel is displayed at a location corresponding to the location of each user input key 220, based on the stored arrangement information for at least one of the user input keys 220.

In operation S520, a broadcast information providing screen image 110 constructed by the controller 310 is outputted and displayed under the control of the display processor 320.

If an input signal is received from the user input signal receiving unit 330, arising from operation of one of user input keys, in operation S530, the controller 310 selects a broadcast channel corresponding to broadcast information provided at a location corresponding to the location of the user input key in operation S540.

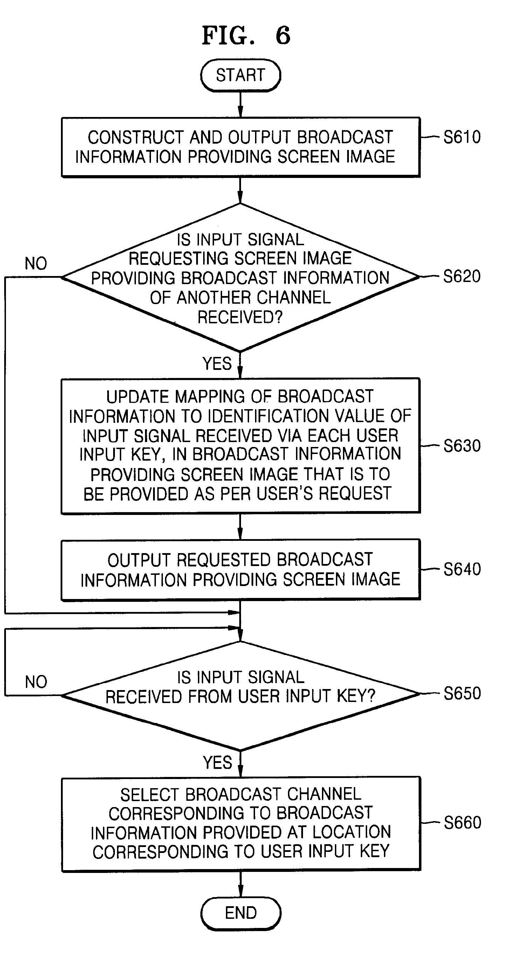

FIG. 6 is a flowchart of a method of selecting a broadcast channel according to another embodiment of the present invention that can be used in the arrangement of FIG. 1. In operation S610, the controller 310 constructs a broadcast information providing screen 112 image so that broadcast information of each channel is displayed at a location corresponding to the location of each user input key, based on the stored arrangement information for at least one piece of the user input keys, and outputs the broadcast information providing screen image 112, under the control of the display processor 320.

If a user input signal requesting broadcast information of another channel is received through the user input signal receiving unit 330 in operation S620, the controller 310 updates the mapping of broadcast information to an identification value of an input signal received through each user input key in a broadcast information providing screen image 113 that is to be provided according to the user's request, and constructs the broadcast information providing screen image 113 in operation S630.

In operation S640, a screen image 113 providing the requested broadcast information is outputted under the control of the display processor 320. If an input signal is received through the user input signal receiving unit 330 from one of the user input keys in operation S650, the controller 310 selects a broadcast channel corresponding to broadcast information indicated by an identification value of the received input signal, that is, the broadcast information provided at a location corresponding to the user input key, in operation S660.

The present invention can also be embodied as computer readable code in a computer readable medium. Here, the computer readable medium may be any recording apparatus capable of storing data that is read by a computer system, such as a read-only memory (ROM), a random access memory (RAM), a compact disc (CD)-ROM, a magnetic tape, a floppy disk, and an optical data storage device,. The computer readable medium can be distributed among computer systems that are interconnected through a network, and embodiments of the present invention may be stored and implemented as computer readable code in the distributed system.

As described above, in embodiments of the present invention, a broadcast information providing screen image is constructed based on the arrangement information of user input keys of a user input device, thereby allowing intuitive selection of a broadcast channel by a user. Since the user can select a broadcast channel and watch a broadcast program transmitted through the selected broadcast channel by pressing a user input key only once, it is possible to minimize the number of times that a user must press a key to select the broadcast channel, thereby increasing convenience to the user and ease of use.

While this invention has been particularly shown and described with reference to example embodiments thereof, it will be understood by those skilled in the art that various changes in form and details may be made therein without departing from the scope of the invention as defined by the appended claims.

## Claims

1. A method of selecting a broadcast channel, comprising:
constructing a broadcast information providing screen image (110, 112) so that broadcast information of a plurality of channels are displayed at locations corresponding to locations of a plurality of user input keys (220, 221), based on arrangement information of relating to at least one of a plurality of user input keys;
outputting the broadcast information providing screen image (110, 112); and
if an input signal is received from one of the plurality of user input keys (220, 221), selecting the one of the plurality of channels corresponding to the broadcast information at the location in the screen image (110, 112) corresponding to the one of the plurality of user input keys (220, 221).

2. The method of claim 1, wherein the constructing of the broadcast information providing screen image (110, 112) comprises mapping an identification value which identifies an input signal received according to the one of the plurality of user input keys (220, 221) to the broadcast information at the location in the screen image (110, 112) corresponding to the one of the plurality of user input keys (220, 221).

3. The method of claim 2, further comprising, if an input signal requesting a second broadcast information providing screen image (113) is received, updating the mapping so that an identification value identifying another input signal received through the one of the plurality of user input keys indicates the broadcast information at the corresponding location on the second screen image (113) corresponding to the one of plurality of user input keys.

4. The method of claim 1, 2 or 3, wherein the plurality of user input keys are arranged in a first matrix, comprising constructing the broadcast information providing screen image so that cells containing the broadcast information are arranged in a second matrix having the same dimensions as the first matrix.

5. The method of claim 4, wherein one axis of the second matrix denotes channels of broadcasters, and another axis of the second matrix denotes sub channels of the channels of broadcasters.

6. The method of any preceding claim, wherein the broadcast information comprises at least one of a title and a broadcast channel of a broadcast program that is currently being broadcast.

7. The method of any preceding claim, wherein the broadcast information comprises an image representing the broadcast program.

8. The method of any preceding claim, wherein the plurality of user input keys (220, 221) comprises numbered buttons.

9. An apparatus (300) for selecting a broadcast channel, comprising:
a controller (310) arranged to provide a broadcast information providing screen image (110, 112) such that broadcast information of a plurality of channels are arranged at locations according to stored information regarding locations of at least one of a plurality of corresponding user input keys (220, 221);
a display processor (320) arranged to control outputting of the broadcast information providing screen image (110, 112); and
a user input signal receiving unit (330) arranged to receive an input signal from one of the plurality of user input keys (220, 221);
wherein the controller (310) is arranged to select a broadcast channel corresponding to one of the broadcast information at a location of the screen image (110, 112) corresponding to the location of the one of the plurality of user input keys (220, 221) from which the input signal was received.

10. The apparatus of claim 9, wherein the controller (310) is arranged to map an identification value which identifies the input signal received through the one of the plurality of user input keys (220, 221), to the broadcast information at the location of the screen image (110, 112) corresponding to the location of the one of the plurality of user input keys (220, 221).

11. The apparatus of claim 10, wherein, the controller (310) is arranged to respond to an input signal requesting a second broadcast information providing screen image (113), received through the user input signal receiving unit (330), by updating the mapping so that an identification value which identifies another input signal received through the one of the plurality of user input keys (220, 221) indicates the broadcast information at the location of the second screen image (113) corresponding to a location of the one of the plurality of user input keys (220, 221).

12. The apparatus of claim 9, 10 or 11, wherein the controller (310) is arranged so that, where the stored information indicates that the plurality of user input keys (220, 221) is arranged in a first matrix, the broadcast information providing screen image (110, 112) is constructed so that cells containing the broadcast information are arranged in a second matrix having the same dimensions as the first matrix.

13. The apparatus of claim 12, wherein the controller (310) is arranged to construct the broadcast information providing screen image (110, 112) so that one axis of the second matrix denotes channels of broadcasters, and another axis of the second matrix denotes sub channels of the channels of broadcasters.

14. The apparatus of any of claims 9 to 13, wherein the broadcast information comprises at least one of a title and a broadcast channel of a broadcast program that is currently being broadcast.

15. The apparatus of any of claims 9 to 14, wherein the broadcast information comprises an image representing a broadcast program.

16. An apparatus according to any of claims 9 to 15, comprising said plurality of user input keys (220, 221).

17. An arrangement comprising:
an apparatus (100, 300) according to any of claims 9 to 15; and
a user input device (200) comprising said plurality of user input keys (220, 221).

18. An apparatus according to claim 16 or an arrangement according to claim 17, wherein the plurality of user input keys (220, 221) comprises numbered buttons.

19. A computer readable medium having recorded thereon a computer program for executing a method of selecting a broadcast channel, the method comprising:
constructing a broadcast information providing screen image (110, 112) so that broadcast information of a plurality of channels are displayed at locations corresponding to locations of a plurality of user input keys (220, 221), based on arrangement information of at least one piece of the plurality of user input keys (220, 221);
outputting the broadcast information providing screen image (110, 112); and
if an input signal is received from one of the plurality of user input keys (220, 221)(220, 221), selecting one of the plurality of channels corresponding to broadcast information at a location of the screen image (110, 112) corresponding to the one of the plurality of user input keys (220, 221).
